# EUROPEAN PATENT SPECIFICATION

(11) **EP 0 430 668 B1**
(45) Date of publication and mention of the grant of the patent: **06.05.1998**
(21) Application number: 90312941.9
(22) Date of filing: 28.11.1990
(51) Int. Cl.: G06F 12/02

(54) **Method and system for reclaiming unreferenced computer memory space**
Verfahren und Anordnung zur Rückforderung nicht beanspruchten Computer-Speicherraumes
Procédé et système de récupération d'espace non référencé de mémoire d'ordinateur

(30) Priority: 28.11.1989 US 442374
(43) Date of publication of application: 05.06.1991
(73) Proprietor: XEROX CORPORATION, Rochester New York 14644 (US)
(72) Inventor: Weiser, Mark D., Palo Alto, California 94301 (US); Demers, Alan J., Woodside, California 94062 (US); Bobrow, Daniel G., Palo Alto, California 94301 (US); Hayes, Barry, Stanford, California, 94309 (US)
(74) Representative: Johnson, Reginald George

(56) References cited:
- PROCEEDINGS OF THE INTERNATIONAL CONFERENCE ON && PROCESSORS 1987, WASHINGTON, IEEE COMP SOC PRESS; US pages 502 - 505; EDWARDS ET AL: 'The Symbolics I- Machine Architecture. A Symbolic Processor Architecture for VLSI Implementation.'
- PROCEEDINGS OF THE TWELFTH ANNUAL INTERNATIONAL && APPLICATIONS CONFEENCE 1988, WASHINGTON, IEEE COMP SOC PRESS; US pages 324 - 328; GUPTA ET AL: :'Reliable Garbage Collection in Distributed Object Oriented Systems'
- SOFTWARE PRACTICE & EXPERIENCE. vol. 18, no. 9, September 1988, CHICHESTER GB pages 807 - 820; BOEHM ET AL: 'Garbage Collection in an Uncooperative Environment'
- THE ART OF COMPUTER PROGRAMMING, Addison-Wesley, 1969, US, vol. 1, page 258,259; Donald E. Knuth of Standford University: "Fundamental Algorithms"

## Description

This invention relates generally to computer memory management and more particularly to tracing-type garbage collection.

Garbage collection is the process of automatically reclaiming usable memory spaces in a computer memory by locating objects (blocks of memory) that are no longer needed, independently of the programs which request the allocation of such memory spaces. It is not always advisable to permit user programs to de-allocate the space allocated for the objects they create This is because other programs may contain references to these objects, and premature deallocation would cause an error.

Garbage collectors must verify that there are no references (pointers) to an object, i.e., that the object is inaccessible, before deallocating the object's memory space. There are two general approaches to garbage collection: reference counting and tracing. Reference counting garbage collectors maintain a count of how many references there are to each object. If the reference count is zero, the block of memory can be de-allocated (reclaimed). Reference-counting garbage collectors are efficient to execute but they have several limitations. They fail to recognize inaccessible "cyclic structures", which directly or indirectly reference themselves. Further, the maintenance of reference counts uses up space and can noticeably slow the performance of the user program.

Tracing garbage collectors periodically trace pointers, starting with a root set of objects. All objects pointed to by the root set are identified as reachable. Reachable objects are either marked or copied to another location. All objects pointed to by reachable objects are also identified as reachable. The process continues until all memory objects reachable from the root set have been found. What remains as unmarked (or uncopied) is inaccessible, and thus garbage. These inaccessible storage areas are de-allocated, and returned to the pool of available storage.

Tracing garbage collectors can cause significant interruptions of program execution. One approach to limiting the length of interruption is to define a "threatened set" of objects subject to collection. This approach is referred to as "partially threatening." By limiting the threatened set, the amount of tracing can be reduced, improving performance. For example, in "generational" garbage collectors, only younger objects are threatened. However, it is still necessary to determine whether an object pointed to is in the threatened set, preferably without following each pointer. One solution is to store newer objects in a particular region of memory as they are created. The garbage collector then need only scan for pointers to address in this region. Such generational collectors copy the threatened but reachable objects into the "non-threatened" memory space reserved for older objects, leaving a free, threatened space for the next generation.Although copying collectors have the advantage of compacting the use of memory space, the copying operation is time-consuming. Further, it is not possible to sub-divide the threatened set at the time of collection. Still further, copying collectors must have knowledge of which bits in an object are address pointers (as opposed to data or instructions), because they update the pointers when they move objects to the non-threatened region. Copying collectors are thus incompatible with "conservative" garbage collection. In conservative collectors, the collector does not have perfect knowledge about the location of pointers, but makes conservative assumptions about which patterns of bits might be pointers to allocated objects and treats the object "pointed to" as reachable.

PROCEEDINGS OF THE INTERNATIONAL CONFERENCE ON COMPUTER DESIGN: VLSI IN COMPUTERS & PROCESSORS 1987, WASHINGTON, IEEE COMP SOC PRESS; US, pages 502-505; EDWARDS et al: "The Symbolic I-Machine Architecture. A Symbolic Processor Architecture for VLLSI Implementation" discloses two strategies for garbage collection in a system comprising a computer having a memory storing a plurality of objects. In both strategies, the objects are separated into a safe set and a threatened set depending on their memory location. In dynamic Garbage collection, a linear scan is performed and if a word is a pointer to old space (threatened space), the storage containing the object is copied to new space and the pointer is updated, so that at the end of the scan all of new space points to new space.

PROCEEDINGS OF THE TWELFTH ANNUAL INTERNATIONAL COMPUTER SOFTWARE & APPLICATIONS CONFERENCE 1988, WASHINGTON, IEEE COMP SOC PRESS; US, pages 324-328; GUPTA et al: "Reliable Garbage Collection in Distributed Object Oriented Systems" discloses reference counting and mark and sweep type garbage collection and discusses the problems with them in particular in distributed system comprising a plurality of nodes (processor with local memory). This document discloses a modified reference counting which is used to keep track of inter-node references. Each object has a field for the number of external reference counts, where in a locally inaccessible object which has a reference count of 0 is entered in a local garbage table, where its local age field is set to zero, and if the object is already in the garbage table its age field is increased by one. If this object is not accessed by any object in another node and its age field is greater than a threshold, it is migrated to a dump-node which removes the object.

SOFTWARE PRACTICE & EXPERIENCE, vol. 18, no. 9, September 1988, CHICHESTER GB, pages 807-820; BOEHM ET AL: "Garbage Collection in an Uncooperative Environment" discloses a mask and sweep collector. The approach of this document is to treat any data item directly accessible to the program as a potential pointer. The storage allocator ensures that given such a data value, it can be determined whether it points to a valid object that is administered by the allocator. If so, it is assumed that the data value was in fact a pointer, and that the object it points to is accessible. Similarly, any data inside the objects is treated as potential pointers to be followed if they in turn point to valid data objects.

THE ART OF COMPUTER PROGRAMMING, published by Addison-Wesley, 1969, US, vol. 1, pages 258 and 259; Donald E. Knuth of Stanford University: "Fundamental Algorithms" defines partial ordering and discloses its use for the time allocation of an object. A problem of topological sorting using partial ordering is illustrated.

The invention is intended to provide a non-reference-counting, tracing garbage collector which can be partially threatening but does not require the copying of objects, and which can be used to combine conservative and generational garbage collection.

According to one aspect of the invention there is provided a garbage collection system as defined in claim 1 for reclaiming unreferenced memory space in a computer, the system comprising: said computer having a memory comprising blocks of memory; a plurality of objects stored in said memory, each of said objects comprising a block of memory, at least some of said objects containing pointer values pointing to other objects; and garbage collection means comprising: means for receiving a partition value; means for partitioning the objects into a safe set and a threatened set; means for identifying rescuer objects in the safe set; means for identifying as reachable objects all objects in the threatened set that are pointed to from the rescuer objects and all objects in the threatened set that are pointed to from other reachable objects; and means for de-allocating all objects in the threatened set not identified as reachable; said system being characterised in that each one of said objects has one associated A-value stored in said memory for representing a partial ordering of the objects; each one of said objects has one associated F-value stored in said memory for representing a range of A-values containing the A-value of any object pointed to by said one of each of said objects; said partitioning means comprises means for comparing the partition value to the A-values and partitioning the objects into the safe set and the threatened set such that objects in the safe set have an A-value less than the partition value in the partial ordering and objects in the threatened set have an A-value greater than or equal to the partition value in the partial ordering; and said means for identifying rescuer objects in the safe set comprises means for comparing the partition value to the F-values and identifying rescuer objects including objects having an F-value greater than or equal to the partition value in the partial ordering.

According to another aspect of the invention there is provided a method as defined in claim 5 for reclaiming unreferenced memory space in a computer having a memory comprising blocks of memory and a plurality of objects stored in the memory, each of said objects comprising a block of memory, at least some of said objects containing pointer values pointing to other objects, the method comprising the steps of: receiving a partition value; partitioning the objects into a safe set and a threatened set; identifying rescuer objects in the safe set; identifying as reachable objects all objects in the threatened set that are pointed to from the rescuer objects and all objects in the threatened set that are pointed to from other reachable objects; and de-allocating all objects in the threatened set not identified as reachable; said method being characterised in that: said method comprises the steps, performed prior to said partitioning step, of: storing a plurality of A-values; associating each A-value with at least one of the objects such that each object O has one associated A-value A(O) for representing a partial ordering of objects; storing a plurality of F-values; associating each F-value with at least one of the objects such that each object O has one associated F- value F(O) for indicating a range of values containing the A-value of any object pointed to by said object O; said partitioning step comprises comparing the partition value to the A-values and partitioning the objects into the safe set and the threatened set such that objects in the safe set have an A-value less than the partition value in the partial ordering and objects in the threatened set have an A-value greater than or equal to the partition value in the partial ordering; and said step of identifying rescuer objects in the safe set comprises comparing the partition value to the F-values associated with the objects and identifying rescuer objects including objects having an F-value greater than or equal to the partition value in the partial ordering.

Thus, objects are partitioned into "safe" and "threatened" sets. The safe objects are further partitioned into "bystanders" and "rescuers". The threatened objects pointed to by rescuers are identified as reachable. All threatened objects pointed to from reachable objects are also identified as reachable. When all reachable threatened objects have been identified, all unreachable threatened objects are "collected", or freed.

Further according to the invention, objects have A-values and F-values. The A-values (which may represent the time of allocation of the object) are used to partition objects into "safe" and "threatened". A value G is specified as the generational partition. Objects having an A-value less than G are safe, and the other objects are threatened. The F-values are used to partition the safe objects into rescuers and bystanders. The F-value represents the maximum A-value of the objects pointed to by an object. A safe object is a rescuer only if its F-value is not less than G, indicating that the object may point to a threatened object.

Advantageously, the A-values and F-values limit the size of the rescuer set and the scope of the tracing. The A-values and F-values also allow the flexible definition of the generational partition G without the necessity of moving objects. This in turn allows a conservative approach to the identification of pointers. In a preferred embodiment, the A-values and F-values are maintained only for pages of objects. If a safe page is written to between collections, it becomes part of the rescuer set and its F-value is updated during the trace phase of the collection. The F-values of reachable threatened pages are also updated during the trace phase to refer to objects actually encountered. The maintenance of the F-values is thus accomplished with minimum overhead.

In one specific form, the invention provides a method for identifying reachable objects, in a generational garbage collector for reclaiming unreferenced memory space in a computer memory, the memory storing a plurality of objects, each object having a time of allocation, and at least some of the objects having pointers to other objects, comprising the steps of:
storing a plurality of A-values, each A-value being associated with one or more objects and representing the time of allocation of the oldest of said one or more associated objects;
storing a plurality of F-values, each F-value being associated with one or more objects and representing the A-value associated with the youngest object pointed to from said one or more associated objects;
receiving a generational partition value;
partitioning the objects into safe objects and threatened objects such that safe objects have an associated A-value less than the generational partition and threatened objects have an associated A-value greater than or equal to the generational partition;
identifying as rescuer objects all of the safe objects having an associated F-value greater than or equal to the generational partition; and
identifying as reachable objects all of the threatened objects pointed to from safe objects and all of the threatened objects pointed to from other threatened objects.

In another specific form, the invention provides a method of tracing pointers to objects in a computer sysystem having a memory and a plurality of objects stored in the memory, some of the stored objects pointing to other objects, comprising the steps of:
storing a plurality of A-values and associating each A-value with at least one object stored in the memory such that each object O has an ascertainable A-value A(O) for representing a partial ordering of objects;
storing a plurality of F-values and associating each F-value with at least one object stored in the memory such that each object O has an ascertainable F-value F(O);
maintaining the stored F-values to assure that each F-value F(O) is greater than or equal to A(O') if object O points to object O';
defining a value G; and
searching for pointers to objects having an A-value greater than or equal to G by tracing pointers from objects having an F-value greater than or equal to G.

Preferred embodiments of the invention will now be described, by way of example, with reference to the accompanying drawings, in which:-
Figs. 1-3 are flowcharts of the tracing phase of a trace and sweep garbage collector
Fig. 4 is a flowchart of the sweep phase of a trace and sweep garbage collector.
Fig. 5 is a block diagram of the layout of computer memory for a garbage collection system.
Fig. 6 is a state diagram of the possible states and transitions for objects in a garbage collection system.
Figs 7-8 are block diagrams of a computer program for garbage collection.
Fig. 9 is a flowchart of the test for pointers.
Fig. 10 is a block diagram of the computer program for the sweep phase of the garoage collection system.

The preferred embodiment of the invention is a trace and sweep, non-copying, generational garbage collection program, which makes conservative assumptions about which patterns of bits might be pointers The program operates on a virtual memory (VM) system wherein memory is divided into pages One or more objects can be stored on each page. An object is a block of memory allocated at a single time and containing O, 1 or more pointers to other objects. The time of allocation of an object (O) is referred to as its A-value, A(O).For collection, objects are partitioned into "safe" and "threatened" ones based on their A-values, without reference to their location in memory. For efficiency, the partitioning is done in a page-based way. For each page (p), an A-value A(p) is stored A(p) is the minimum A(O) for objects on the page, representing the time of allocation of the oldest object on the page. The A-value for the page is set when the first object on a page is allocated. In the discussion that follows, references to A-values for an object will be understood to refer to the A-value of the page on which the object is stored. A-values for individual objects are not stored as such.

A single time G (the generational partition) partitions the objects. The threatened set is defined as objects on pages p with A(p) ≥ G. Only objects on threatened pages can be collected. Objects on safe pages, where A(p) < G, are not collected. G can be set at the time the collector is run, to flexibly define the generational partition without moving objects. This feature is to be distinguished from prior art generational collectors, where the generational partitioning is predefined by the location of objects, and the threatened set cannot be subdivided.

For each page, an F-value F(p) is also stored This value approximates the "points-to" relationship among objects; F(p) is greater than or equal to the maximum A-value of the objects pointed to by any object on the page, i.e., the youngest object pointed to. F(p) can be a conservative (high) estimate, as long as no object on the page points to any object with a higher A-value than F(p). Methods of maintaining F(p) will be described below.

It will be understood that F-values, like A-values, can be associated with each object, rather than each page, and that the invention could be implemented with either or both values being stored and maintained for each object, instead of page-based values. It will also be understood that it is possible to use A-values representing values other than time, as long as the A-values can be compared in a partial order with a "less than" (<) operator. If this condition is met, then the F-values can approximate the "points-to" relationship by indicating a range of values containing the A-value of any object O' pointed to from object O. In this embodiment, this property is defined as follows:

If object (0) points to object (0'), then F(0) ≥ A(0').

In other words, an object (0) cannot point to an object (0') if F(0) is not greater than or equal to A(0'). The F-value, as thus defined, provides an efficient way to determine whether an object might point to another object having a particular A-value, i.e., a threatened object.

The F-value F(p) for a page is greater than or equal to the maximum F(0) for all objects on the page. The F-pages may be the same or different sizes from the A-pages. Similarly, the F-pages and A-pages are not necessarily the same as the virtual memory pages. Although the F-pages, A-pages, and virtual memory pages are equal in the embodiments described herein, the trade-offs in the selection of page sizes will be apparent to those of ordinary skill in the art informed by the present disclosure. For example, smaller A-pages require more space for storage of A-values but may result in more objects being collected.

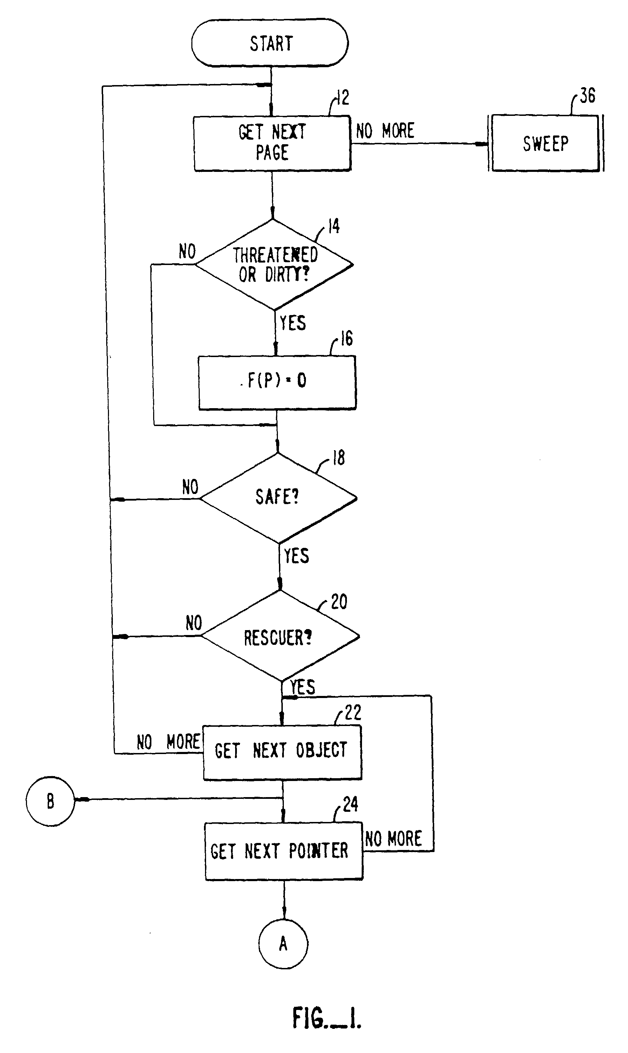

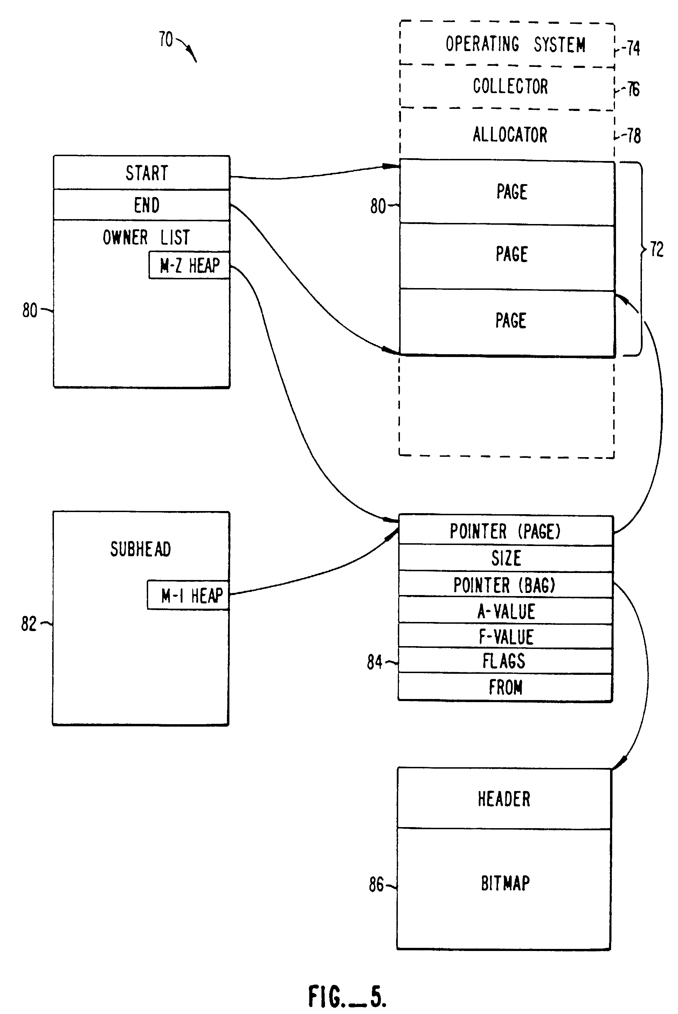

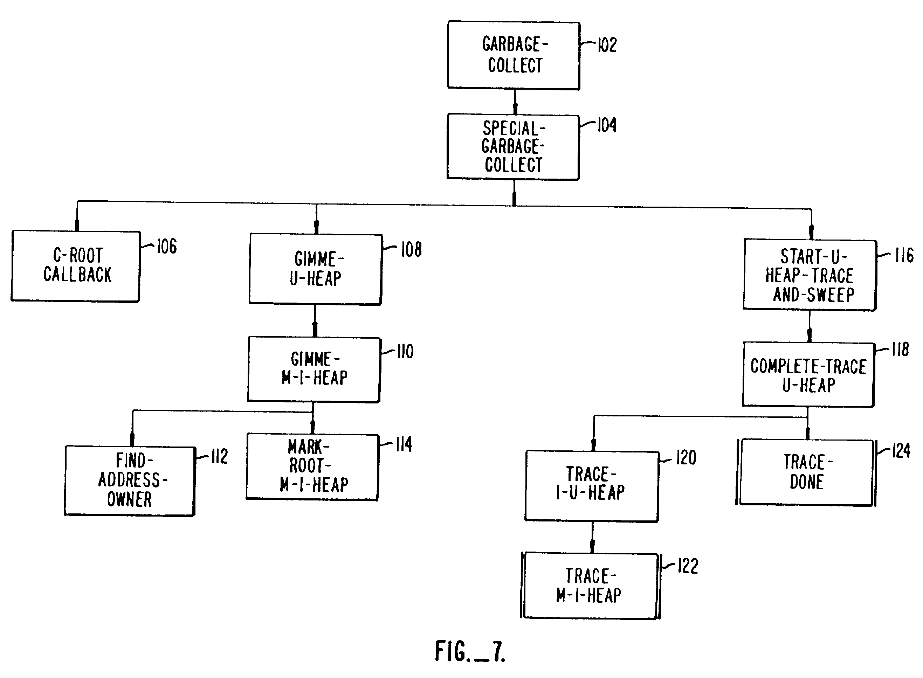

To enable one of ordinary skill to make and use the invention, two embodiments will be described. The first embodiment will be described with reference to flow charts of Figs. 1 through 4 to illustrate the basic concepts of the invention in a simple form. The second embodiment will be described in more detail with reference to Figs. 5 through 10 and an implementation in source code.

In the first embodiment, the garbage collector uses the VM operating system "dirty bit" to determine whether a pointer may have been updated and consequently the F-value may have changed. The dirty bits correspond to each page and are set by the VM operating system whenever the page is written to. If the dirty bit is on, the garbage collector will reset the page's F-value during its operation to refer to objects actually encountered.

The garbage collector has a "trace" phase and a "sweep" phase. During the trace phase, all threatened objects reachable from safe objects are marked. During the sweep phase, all unmarked threatened objects are "collected" (freed).

Figs. 1-3 are flow charts of the trace phase of the garbage collection process of the first embodiment. Referring to Fig. 1 at block 12, the dirty bit and the F and A-values for a page are accessed. At block 14, the A-values and dirty bits are tested to determine whether the page is threatened (A(p) ≥ G). If the page is threatened, or if the page has been written to (dirty bit on), then at block 16 the page's F-value is initialized to zero, in anticipation of resetting the F-value during the tracing phase.

At block 18, the page's A-value is tested to determine if the page is safe. At block 20, safe pages (A(p) < G), are partitioned into "rescuers" and "bystanders". Rescuers are safe pages that either have the dirty bit on or have an F-value indicating that the page may point to a threatened object (F(p) ≥ G). In this manner, the F-value is used to limit the rescuer set without the necessity of following pointers to determine whether each safe object points to a threatened object.

Inclusion of safe dirty pages in the rescuer set increases the rescuer set, but it is necessary (because the true F-value is not known) and it ensures that the F-value for the page is updated. This update will limit the rescuer set for later collections. The F-value could be maintained more accurately between collections, for example by monitoring all assignments to pointers inside objects during execution of user programs. When a pointer is written, F(p) can then be set to either Max(A(O'), F(p)), where O' is the object pointed to, or to Max(A), defined to be the maximum A-value across all objects. Either of these approaches would improve the efficiency of the collector but would require execution of specially generated code (or special hardware) for all pointer assignments, as well as language-specific knowledge of pointers.

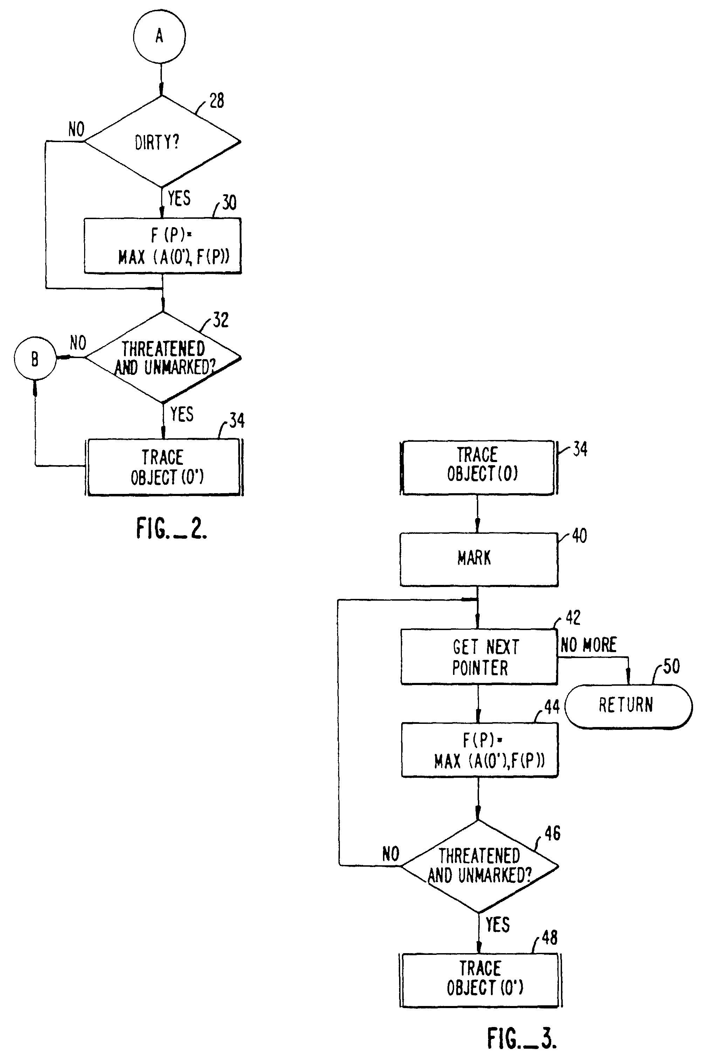

If the page is a "rescuer", then at block 22 an object (O) on the page is examined. At block 24, each potential pointer to another object (O') is read. Referring now to Fig. 2, at block 28, the dirty bit for the rescuing page is tested. If the dirty bit is on, then at block 30 the F-value is updated as follows. The A-value A(O') of the object pointed to is compared to the F-value F(p) for the rescuing page, and the F-value F(p) is set to the maximum of these two values. In this way, the F-value will ultimately be reset to the maximum A-value of objects pointed to from objects on the page, and it will then be accurate within the limits of the pointer identification technique.

At block 32, the object (O') pointed to from the object (O) on the rescuing page is tested to see if it (O') is in the threatened set (A(O') ≥ G) and if it is unmarked. For each unmarked threatened object pointed to, at block 34, the trace-object routine is called. On return, the object (O) is checked for more pointers. These steps at blocks 22-34 are repeated for all objects on the rescuing page. Then, when there are no more objects on the page, the next page is checked, until there are no more pages. Then the dirty bits are reset to false for all pages and at block 36 the sweep routine is called.

Fig. 3 is a flowchart of the trace-object routine 34 for tracing each unmarked threatened object (O) pointed to by a rescuer (or by any reachable object). At block 40 the object (O) is marked as reachable (not garbage). Then at block 42, each possible pointer from object (O) to another object (O') is read. At block 44, the F-value F(p) for the page p containing object (O) is updated. The current F-value is compared to A(O') and the higher value becomes the new F-value

In this manner, the F-values for each reachable threatened page will be updated, whetner or not the dirty bit is on. This is desirable because objects may be collected (freed) from a threatened page, and the pointers from the freed object will not affect the new F-value.

At block 46, the object pointed to (O')is tested to see if it is a threatened (A(O') ≥ G), unmarked object. For each threatened, unmarked object, at block 48 the trace-object routine is recursively called When there are no more pointers in the object, at block 50, control returns to the calling routine.

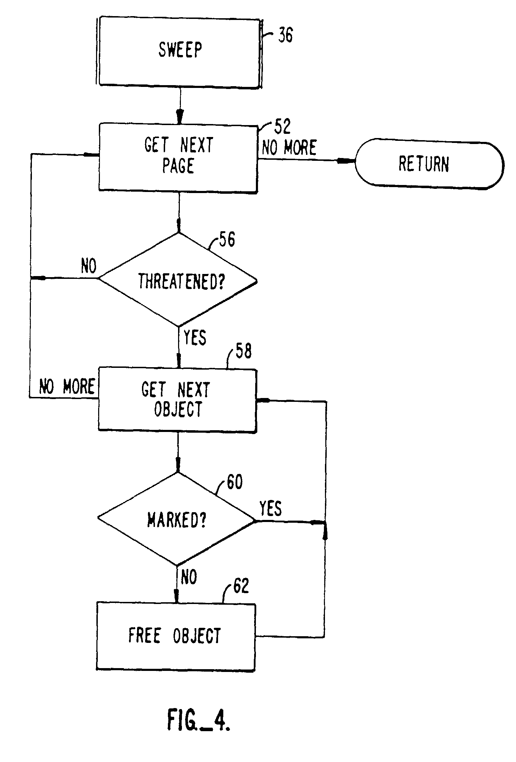

Fig. 4 is a flowchart of the sweep routine 36 At blocks 52 and 56, each page is checked to see if it is threatened (A(p) ≥ G). For all threatened pages, at blocks 58, 60, and 62 the unmarked objects are collected. The remaining objects are then unmarked.

A second embodiment will now be described in more detail. In this embodiment, a different but substantially equivalent technique is used to maintain F-values. Each page is write-protected after a collection, and a current-time parameter is incremented. The first time a protected page is written to, F(p) is updated to the value of current-time as part of the page fault. When the collector is run, safe pages that have been written to will become rescuers (because G ≤ current time) and will have their F-value updated. As with the dirty bit technique, all reachable threatened pages will also have their F-value updated to refer to the maximum A-values of the objects actually encountered by the trace.

Other differences between the two embodiments described herein are illustrative of variations in programming strategy within the scope of the present invention.

Referring to Fig. 5, a logical view of the organization of a computer memory 70 is shown. The memory comprises a user memory space 72, an operating system 74, a collector 76, an allocator 78, and collector data structures 80, 82, 84, 86.

User memory space 72 may be a virtual address space for user programs and data, with some of the stored data and programs actually stored on an external storage device, such as a magnetic disk drive. In this embodiment, user memory space 72 is divided into pages 88 of equal size for storing objects. The term "object" refers to a block of memory that can be allocated at a particular time for storing programs or data.

Virtual memory operating system program 74 controls the copying of pages to and from external storage (not shown) and the execution of stored programs on at least one CPU (not shown). Allocator 78 allocates available memory blocks for programs when requested by operating system 74. Collector program 76 is a garbage collector according to one embodiment of the present invention.

The key data structures used by garbage collector 76 and allocator 78 are global page heap 80, subheap 82, m-i-heap 84, and bag 86. Global page heap 80 stores pointers to the start and end of user memory space 72, and an owner list. The Owner list is an ordered list of pointers to a set of m-i-heap data structures, with a slot reserved in the owner list for each page in user memory space 72.

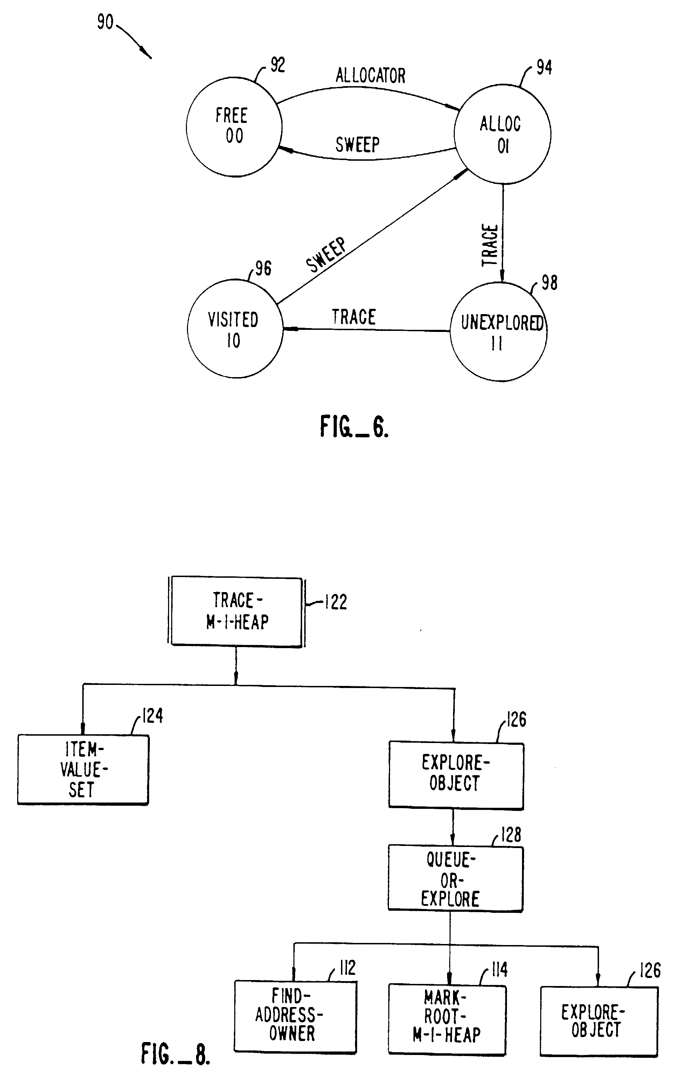

If there are any allocated objects on a page, then allocator 78 will have allocated and initialized an m-i-heap data structure for that page, and will have stored a pointer to this m-i-heap in the appropriate slot or slots in the owner list. Subheap 82 is a list of pointers to active m-i-heaps An m-i-heap 84 stores a pointer to the start of the page, the size of objects on the page, a pointer to a bag data structure for this page, and the page s A-value and F-value. Bag 86 stores a bitmap of state values for the objects on the page, described below with reference to Fig. 6. A header area in bag 86 stores the total number of objects on the page and the total number of objects in each of the four possible states.

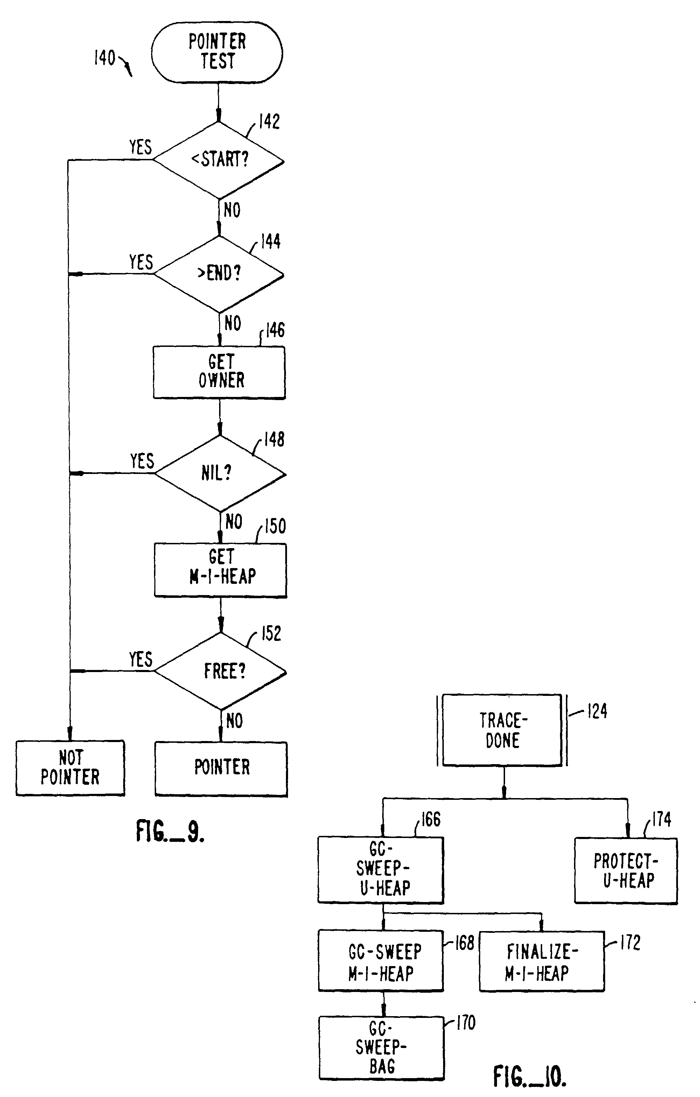

Fig. 6 is a state diagram 90 showing the four states which an object can be in, and the state transitions. An object can be in one of these states: free 92, allocated 94, visited 96 or unexplored 98. The state information requires two bits per object. The bits for objects on a page are stored together in the bitmap as sets of words. When the garbage collector is not running, all objects are marked as "not visited" (leftmost bit=0) and are either allocated (01) or free (00). Objects can transition from free to allocated (rightmost bit 1) by the action of the allocator during execution of user programs During the trace phase of the garbage collection, objects may transition from the allocated state to the unexplored (queued) state (leftmost bit 1), and then when they are explored from the unexplored state to the visited state (rightmost bit 0). During the sweep phase, the visit (leftmost) bit is read to see if the object has been visited, and the object gets a new state. Those objects which have been visited become allocated. Objects which are allocated but not visited during the trace become free. An efficient programming technique for implementing the sweep is described below with reference to Fig. 10.

The above-described variables and pointers are sufficient for an understanding of the following description of the garbage collector program of this embodiment. It will be understood that there are other variables and pointers, and other data structures, not shown or described, for use by the allocator 78. Allocator 78 will not be described in detail. A variety of allocator programs could be constructed by those of ordinary skill in the art to work with the data structures used by the garbage collector of this embodiment. The only significant constraint imposed by this embodiment is that each page stores objects of a particular fixed size.

It will be further understood that, although the garbage collector described below is executed on request and interrupts the execution of user program, it can be adapted to run in parallel or concurrently with the execution of user programs, preferably as an independent process For example, a copy of some or all of the pages may be made and the address of the original page stored in the m-i-heap. The copy is used to determine what can be collected. The copy-on-write feature of the virtual operating system can be used to reduce the overhead of copying all of the data. Copy-on- write is a method of making virtual copies of large segments of a memory. Many programs share virtual copies, and the operating system only makes actual private copies of data which is written to by a program. Advantageously, the garbage collector does not modify the user data itself.

The structure and operation of the garbage collection computer program of this embodiment will now be described. The program is written in the "C" language for workstation UNIX operating systems.

Figs. 7 through 10 illustrate the structure of the computer program of the preferred embodiment for a single garbage collection. In Figs. 7, 8, and 10, each block represents a "C" function, or subroutine. A function is called (invoked) by the function above it in the drawing if a line connects the functions. Calls proceed generally from left to right after a return from all called functions in a line.

Referring to Fig. 7, the function garbage- collect 102 sets the generation gap variable and calls the function special-garbage-collect 104. Special-garbage-collect 104 calls C-root-callback 106 to mark all root objects pointed to from globals, stacks, and registers as unexplored. Then special-garbage-collect 104 calls function gimme-u-heap 108, which, for each "rescuing" page (A(p) < G and F(p) ≥ G), calls gimme-m-i-heap 110 to search the rescuing page for pointers to the threatened pages Gimme-m-i-heap 110 initializes the F-value for the rescuing page to zero, then uses each pointer on the rescuing page to mark each referenced threatened object as "unexplored" and to update the F-value The test for pointers will be described below with reference to Fig. 9.

Gimme-m-i-heap 110 calls function find-address - owner 112, which function returns the "owner" of the object pointed to by each pointer The "owner" is the m-i-heap for the page on which the object pointed to is stored The find-address-owner function takes an aadress as an argument, gets the start address of the user space from the global page heap, and then subtracts the start address from the argument address to obtain an offset. The offset is divided by the page size and the result is truncated to get an index into the owner list. The owner list, at this index, points to the m-i-heap (owner) for the argument address. The address of this m-i-heap is returned to gimme-m-i-heap.

The owner m-i-heap contains the A-value for the page (and thus for the object) pointed to If the A-value is greater than the F-value for the rescuing page, the F-value is updated to the higher value.

Function mark-root-m-i-heap 114 is called by gimme-m-i-heap 110 to mark each threatened object pointed to by the rescuer as "unexplored" in the bitmap. The object is threatened if its page's A-value is greater than G, indicating that all objects on the page are younger than the generation gap.

After all rescuing pages have been searched for pointers, function start-u-heap-trace-and-sweep 116 is called by special-garbage-collect 104 to start the trace. Complete-trace-u-heap 118 calls trace-1-u-heap to loop 120 through the subheap until there are no unexplored objects. If there are unexplored objects in an m-i-heap, then trace-m-i-heap 122 is called.

Referring to Fig. 8, for each unexplored object trace-m-i-heap 122 calls item-value-set 124 to mark the object as "visited" and then calls explore-object 126.
Explore-object 126 looks for pointers in the unexplored object. If the object pointed to is neither "free" nor "visited" the function queue-or-explore-object 128 is called for the object pointed to. The function queue-or-explore object 128 calls find-address-owner 112 to get the owner m-i-heap for the object pointed to. If the object is on the current page (and it is not yet visited), then explore-object 124 is called recursively. If the object pointed to is not on the current page, then mark-root-m-i-heap 114 is called. If the object pointed to is on a threatened page, this function marks the object as unexplored. By queuing objects pointed to on other pages, the potential depth of recursion is limited, and the possibility of page faults is also limited.

Regardless of whether the object pointed to is queued or explored, the F-value for the current page is updated. If the A-value of the page pointed to is greater than the current F-value, then the current F-value is reset to the higher value.

Fig. 9 is a flow chart 140 of one method for determining whether a word represents a possible pointer. The tests are arranged in order to eliminate non-pointer values as quickly as possible. At step 142 the word is eliminated if the value of the word is less than the starting address of user memory space (stored in the global page heap). At step 144, the word is eliminated if its value is greater than the ending address of the user memory space (also stored in the global page heap). At step 146, the owner of the "pointer" is determined from the global page heap owner list. If step 148 indicates that the owner list has a nil value for the owner at this address, than the page is not in use and the value is not a pointer. If there is a non-nil address for the owner, then, at step 150, the m-i-heap that owns the page with this address is accessed. The m-i-heap points to the bag, where the bit map indicates the state of the object at the pointed-to address If step 152 indicates that the object is free, then this value cannot be a pointer.

If the value has passed all of these tests, then it is treated as a pointer. It may in fact not be a pointer, but these tests eliminate a reasonable number of non-pointers at minimal expense for a conservative, non-copying collector. Other tests (some of which may be language-specific) can be added where a higher collection rate is deemed worth the additional computational expense. For example, the value can be tested for word alignment. If the low-order bits are non-zero, the value is not a pointer. This is an inexpensive test performed after step 144 Another test is whether the value points to the start of an object, which can be determined by subtracting the value of the page start address and dividing the result by the object size. This is a relatively expensive test, preferably performed last.

Referring to Fig. 10, at the completion of the trace phase, when there are no more unexplored objects, the function trace-done 124 is called. Trace-done 124 calls gc-sweep-u-heap 166 to perform the sweep. For each m-i-heap in the subheap, gc-sweep-m-i-heap 168 is called. This function, calls gc-sweep-bag 170 to update the bit map

After the trace is complete, all objects are in one of the three states of free, allocated or visited. The sweep phase converts visited objects to allocated, and allocated objects to free Free objects remain free. Unthreatened (safe) pages are not "swept". The sweep phase operates on each bitmap for a threatened page, one word at a time. First the word is "anded" with a word of 1010101010101010 1010101010101010 to clear (set to free) the low order (free/allocated) bit for each object. Then the word is shifted right one bit, making all visited items allocated without changing the free items

After the bit map is updated, the totals for each state are updated. If the totals are zero except for the free total, then finalize-m-i-heap 172 is called to free the bag and the page. The entries for this page in the subheap and in the global page heap owner list become nil, and the m-i-heap is freed. The subheap is then compacted to remove the nils. Protect-u-heap 174 is called to write-protect the pages to cause a fault the next time the page is written to.

The invention has now been described and illustrated with reference to particular embodiments. It will, however, be understood by those skilled in the art that modifications and additions may be made. For example, pointers could be located using programming-specific information. For another example, the non-copying collector described in this embodiment could be combined with a copying collector to make a partially copying collector using well-known methods.

## Claims

1. A garbage collection system for reclaiming unreferenced memory space in a computer, the system comprising:
said computer having a memory (70) comprising blocks of memory;
a plurality of objects stored in said memory, each of said objects comprising a block of memory, at least some of said objects containing pointer values pointing to other objects; and
garbage collection means (76) comprising:
means (12) for receiving a partition value;
means (14) for partitioning the objects into a safe set and a threatened set;
means (20) for identifying rescuer objects in the safe set;
means (34) for identifying as reachable objects all objects in the threatened set that are pointed to from the rescuer objects and all objects in the threatened set that are pointed to from other reachable objects; and
means (36) for de-allocating all objects in the threatened set not identified as reachable; said system being characterised in that
each one of said objects has one associated A-value (84) stored in said memory (70) for representing a partial ordering of the objects;
each one of said objects has one associated F-value (84) stored in said memory (70) for representing a range of A-values containing the A-value of any object pointed to by said one of each of said objects;
said partitioning means (14) comprises means for comparing the partition value to the A-values (84) and partitioning the objects into the safe set and the threatened set such that objects in the safe set have an A-value less than the partition value in the partial ordering and objects in the threatened set have an A-value greater than or equal to the partition value in the partial ordering; and
said means (20) for identifying rescuer objects in the safe set comprises means for comparing the partition value to the F-values (84) and identifying rescuer objects including objects having an F-value greater than or equal to the partition value in the partial ordering.

2. The system of claim 1 further comprising allocator means (78) for allocating objects and wherein the A-value (84) associated with an object represents the time of allocation of the object.

3. The system of claim 1 or claim 2 wherein the F-value (84) associated with an object is greater than or equal to the A-values associated with the objects pointed to by the object.

4. The system of claim 3 further comprising means for maintaining the F-value associated with an object in response to a change to the object.

5. A method for reclaiming unreferenced memory space in a computer having a memory (70) comprising blocks of memory and a plurality of objects stored in the memory, each of said objects comprising a block of memory, at least some of said objects containing pointer values pointing to other objects, the method comprising the steps of:
receiving (12) a partition value;
partitioning (14) the objects into a safe set and a threatened set;
identifying (20) rescuer objects in the safe set;
identifying (34) as reachable objects all objects in the threatened set that are pointed to from the rescuer objects and all objects in the threatened set that are pointed to from other reachable objects; and
de-allocating (36) all objects in the threatened set not identified as reachable;
said method being characterised in that:
said method comprises the steps, performed prior to said partitioning step, of:
storing a plurality of A-values (84);
associating each A-value with at least one of the objects such that each object O has one associated A-value A(O) for representing a partial ordering of objects;
storing a plurality of F-values (84);
associating each F-value with at least one of the objects such that each object O has one associated F- value F(O) for indicating a range of values containing the A-value of any object pointed to by said object O;
said partitioning step (14) comprises comparing the partition value to the A-values and partitioning the objects into the safe set and the threatened set such that objects in the safe set have an A-value less than the partition value in the partial ordering and objects in the threatened set have an A-value greater than or equal to the partition value in the partial ordering; and
said step (20) of identifying rescuer objects in the safe set comprises comparing the partition value to the F-values associated with the objects and identifying rescuer objects including objects having an F-value greater than or equal to the partition value in the partial ordering.

6. The method of claim 5 wherein said step (34) of identifying reachable objects comprises storing an indication that the object is reachable.

7. The method of claim 5 or claim 6 wherein the step of associating each A-value (84) with at least one of the objects comprises associating with each object an A-value less than or equal to the time of allocation of the object.

8. The method of any one of claims 5 to 7 wherein the step of associating each F-value (84) with at least one of the objects comprises the step of maintaining each F-value so that each object O has an F-value F(O) greater than or equal to the A-value A(O') if object O points to object O'.

## Patentansprüche

1. Speicherbereinigungssystem zum Zurückfordern nicht beanspruchten Speicherraums in einem Computer, wobei das System enthält:
den Computer mit einem Speicher (70), der eine Vielzahl von Speicherblöcken aufweist,
eine Vielzahl von im Speicher gespeicherten Objekten, wobei jedes Objekt einen Speicherblock umfaßt und wenigstens einige der Objekte Zeigerwerte enthalten, die auf andere Objekte zeigen, und
eine Speicherbereinigungseinrichtung (76) mit:
einer Einrichtung (12) zum Empfangen eines Aufteilungswertes,
einer Einrichtung (14) zum Aufteilen der Objekte in einen sicheren Satz und in einen bedrohten Satz,
einer Einrichtung (20) zum Identifizieren der Retterobjekte im sicheren Satz,
einer Einrichtung (34) zum Identifizieren aller Objekte im bedrohten Satz, auf die durch Retterobjekte gezeigt wird, und aller Objekte im bedrohten Satz, auf die durch andere erreichbare Objekte gezeigt wird, als erreichbare Objekte, und
einer Einrichtung (36) zum Aufheben der Zuweisung aller Objekte im bedrohten Satz, die nicht als erreichbar identifiziert werden, wobei das System dadurch gekennzeichnet ist, daß
jedes der Objekte einen assoziierten A-Wert (84) aufweist, der im Speicher (70) gespeichert ist, um eine Aufteilungsordnung der Objekte zu repräsentieren,
jedes der Objekte einen assoziierten F-Wert (84) aufweist, der im Speicher (70) gespeichert ist, um einen Bereich der A-Werte zu repräsentieren, der den A-Wert jedes Objektes enthält, auf das durch das eine Objekt gezeigt wird,
die Aufteilungseinrichtung (14) eine Einrichtung zum Vergleichen des Aufteilungswertes mit den A-Werten (84) und zum Aufteilen der Objekte in den sicheren und den bedrohten Satz aufweist, so daß die Objekte im sicheren Satz einen A-Wert aufweisen, der kleiner ist als der Aufteilungswert in der Aufteilungsordnung, und die Objekte im bedrohten Satz einen A-Wert aufweisen, der größer oder gleich dem Aufteilungswert in der Aufteilungsordnung ist, und
die Einrichtung (20) zum Identifizieren der Retterobjekte im sicheren Satz eine Einrichtung aufweist zum Vergleichen des Aufteilungswertes mit den F-Werten (84) und zum Identifizieren der Retterobjekte, die Objekte mit einem F-Wert enthalten, der größer oder gleich dem Aufteilungswert in der Aufteilungsordnung ist.

2. System nach Anspruch 1, das weiterhin eine Zuweisungseinrichtung (78) zum Zuweisen von Objekten aufweist, wobei der mit einem Objekt assoziierte A-Wert (84) die Zuweisungszeit des Objektes repräsentiert.

3. System nach Anspruch 1 oder 2, wobei der mit einem Objekt assoziierte F-Wert (84) größer oder gleich den A-Werten ist, die mit den Objekten verbunden sind, auf die durch das Objekt gezeigt wird.

4. System nach Anspruch 3, das weiterhin eine Einrichtung zum Aufrechterhalten des mit einem Objekt assoziierten F-Wertes in Antwort auf eine Änderung des Objektes enthält.

5. Verfahren zum Zurückfordern nicht verwiesenen Speicherraums in einem Computer mit einem Speicher (70), der Speicherblöcke und eine Vielzahl von im Speicher gespeicherten Objekten enthält, wobei jedes der Objekte einen Speicherblock umfaßt und wenigstens einige der Objekte Zeigerwert enthalten, die auf andere Objekte zeigen, wobei das Verfahren folgende Schritte umfaßt:
das Empfangen (12) eines Aufteilungswertes;
das Aufteilen (14) der Objekte in einen sicheren und in einen bedrohten Satz,
das Identifizieren (20) von Retterobjekten im sicheren Satz,
das Identifizieren (34) von allen Objekten im bedrohten Satz, auf die durch Retterobjekte gezeigt wird, und von allen Objekten im bedrohten Satz, auf die durch andere erreichbare Objekte gezeigt wird, als erreichbare Objekte, und
das Aufheben (36) der Zuweisung aller Objekte im bedrohten Satz, die nicht als erreichbar identifiziert werden,
wobei das Verfahren dadurch gekennzeichnet ist, daß
das Verfahren folgende Schritte umfaßt, die vor dem Aufteilungsschritt durchgeführt werden:
das Speichern einer Vielzahl von A-Werten (84),
das Assoziieren jedes A-Wertes mit wenigstens einem der Objekte, so daß jedes Objekt (O) einen assoziierten F-Wert F (O) aufweist, um einen Bereich von Werten anzugeben, der den A-Wert jedes Objektes enthält, auf das durch das Objekt O gezeigt wird,
wobei der Aufteilungsschritt (14) das Vergleichen des Aufteilungswertes mit den A-Werten und das Aufteilen der Objekte in den sicheren Satz und in den bedrohten Satz umfaßt, so daß die Objekte im sicheren Satz einen A-Wert aufweisen, der kleiner ist als der Aufteilungswert in der Aufteilungsordnung, und die Objekte im bedrohten Satz einen A-Wert aufweisen, der größer oder gleich dem Aufteilungswert in der Aufteilungsordnung ist, und
der Schritt (20) zum Identifizieren der Retterobjekte im sicheren Satz das Vergleichen des Aufteilungswertes mit den mit den Objekten assoziierten F-Werten und das Identifizieren der Retterobjekte einschließlich der Objekte mit einem F-Wert, der größer oder gleich dem Aufteilungswert in der Aufteilungsordnung ist, umfaßt.

6. Verfahren nach Anspruch 5, wobei der Schritt (34) zum Identifizieren erreichbarer Objekte das Speichern einer Angabe darüber, daß das Objekt erreichbar ist, umfaßt.

7. Verfahren nach Anspruch 5 oder 6, wobei der Schritt zum Assoziieren jedes A-Wertes (84) mit wenigstens einem der Objekte das Assoziieren jedes Objektes mit einem A-Wert, der kleiner oder gleich der Zuweisungszeit des Objektes ist, umfaßt.

8. Verfahren nach einem der Ansprüche 5 bis 7, wobei der Schritt zum Assoziieren jedes F-Wertes (84) mit wenigstens einem der Objekte den Schritt zum Aufrechterhalten jedes F-Wertes umfaßt, so daß jedes Objekt O einen F-Wert F(O) aufweist, der größer oder gleich dem A-Wert A(O') ist, wenn das Objekt O auf das Objekt O' zeigt.

## Revendications

1. Système de récupération d'espace mémoire pour récupérer de l'espace mémoire non référencé dans un ordinateur, le système comprenant :
ledit ordinateur ayant une mémoire (70) comprenant des blocs de mémoire ;
une pluralité d'objets mémorisés dans ladite mémoire, chacun desdits objets comprenant un bloc de mémoire, au moins certains desdits objets contenant des valeurs de pointeur pointant sur d'autres objets ; et
un moyen de récupérateur d'espace mémoire (76) comprenant :
un moyen (12) pour recevoir une valeur de séparation ;
un moyen (14) pour séparer les objets en un ensemble sûr et en un ensemble menacé ;
un moyen (20) pour identifier les objets récupérables dans l'ensemble sûr ;
un moyen (34) pour identifier comme objets atteignables tous les objets dans l'ensemble menacé qui sont pointés à partir des objets récupérables et tous les objets dans l'ensemble menacé qui sont pointés à partir d'autres objets atteignables ; et
un moyen (36) pour désattribuer tous les objets dans l'ensemble menacé non identifié comme atteignables ;
ledit système étant caractérisé en ce que
chacun desdits objets a une valeur A associée (84) mémorisée dans ladite mémoire (70) pour représenter un ordonnancement partiel des objets ;
chacun desdits objets a une valeur F associée (84) mémorisée dans ladite mémoire (70) pour représenter une gamme de valeurs A contenant la valeur A de tout objet pointé par l'un de chacun desdits objets ;
ledit moyen de séparation (14) comprend un moyen pour comparer la valeur de séparation aux valeurs A (84) et séparer les objets en ensemble sûr et ensemble menacé de sorte que les objets dans l'ensemble sûr ont une valeur A inférieure à la valeur de séparation dans l'ordonnancement partiel et les objets dans l'ensemble menacé ont une valeur A supérieure ou égale à la valeur de séparation dans l'ordonnancement partiel ; et
ledit moyen (20) pour identifier les objets récupérables dans l'ensemble sûr comprend un moyen pour comparer la valeur de séparation aux valeurs F (84) et pour identifier les objets récupérables incluant les objets ayant une valeur F supérieure ou égale à la valeur de séparation dans l'ordonnancement partiel.

2. Système selon la revendication 1, comprenant de plus un moyen d'attributeur (78) pour attribuer des objets et dans lequel la valeur A (84) associée à un objet représente le temps d'attribution de l'objet.

3. Système selon la revendication 1 ou la revendication 2, dans lequel la valeur F (84) associée à un objet est supérieure ou égale aux valeurs A associées aux objets pointées par l'objet.

4. Système selon la revendication 3 comprenant de plus un moyen pour maintenir la valeur F associée à un objet en réponse à une modification de l'objet.

5. Procédé pour récupérer de l'espace mémoire non référencé dans un ordinateur ayant une mémoire (70) comprenant des blocs de mémoire et une pluralité d'objets mémorisés dans ladite mémoire, chacun desdits objets comprenant un bloc de mémoire, au moins certains desdits objets contenant des valeurs de pointeur pointant sur d'autres objets, le procédé comprenant les étapes consistant à :
recevoir (12) une valeur de séparation ;
séparer (14) les objets en ensemble sûr et ensemble menacé ;
identifier (20) les objets récupérables dans l'ensemble sûr ;
identifier (34) comme objets atteignables tous les objets dans l'ensemble menacé qui sont pointés à partir des objets récupérables et tous les objets dans l'ensemble menacé qui sont pointés à partir d'autres objets atteignables ; et
désattribuer (36) tous les objets dans l'ensemble menacé non identifiés comme atteignables ;
ledit procédé étant caractérisé en ce que :
ledit procédé comprend les étapes, effectuées avant ladite étape de séparation consistant à :
mémoriser une pluralité de valeurs A (84) ;
associer chaque valeur A à au moins un des objets de sorte que chaque objet (O) a une valeur A associée A(0) pour représenter un ordonnancement partiel des objets ;
mémoriser une pluralité de valeurs F (84) ;
associer chaque valeur F à au moins un des objets de sorte que chaque objet (O) a une valeur F associée F(0) pour indiquer une gamme de valeurs contenant la valeur A de tout objet pointé par ledit objet (O).
ladite étape de séparation (14) comprend la comparaison de la valeur de séparation aux valeurs A et la séparation des objets en ensemble sûr et en ensemble menacé de sorte que les objets dans l'ensemble sûr ont une valeur A inférieure à la valeur de séparation dans l'ordonnancement partiel et les objets dans l'ensemble menacé ont une valeur A supérieure ou égale à la valeur de séparation dans l'ordonnancement partiel ; et
ladite étape (20) consistant à identifier les objets récupérables dans l'ensemble sûr comprend la comparaison de la valeur de séparation aux valeurs F associées aux objets et l'identification des objets récupérables incluant les objets ayant une valeur F supérieure ou égale à la valeur de séparation dans l'ordonnancement partiel.

6. Procédé selon la revendication 5, dans lequel ladite étape (34) consistant à identifier les objets atteignables comprend la mémorisation d'une indication que l'objet est atteignable.

7. Procédé selon la revendication 5 ou la revendication 6, dans lequel l'étape consistant à associer chaque valeur A (84) à au moins un des objets comprend l'association à chaque objet d'une valeur A inférieure ou égale au temps d'attribution de l'objet.

8. Procédé selon l'une quelconque des revendications 5 à 7, dans lequel l'étape consistant à associer chaque valeur F (84) à au moins un des objets comprend l'étape consistant à maintenir chaque valeur F de sorte que chaque objet (O) a une valeur F F(0) qui est supérieure ou égale à la valeur A A(O') si l'objet O pointe sur l'objet O'.
